(19) **Europäisches Patentamt**

**European Patent Office**

**Office européen des brevets**

(11) **EP 1 111 298 B1**

(12) **EUROPÄISCHE PATENTSCHRIFT**

(45) Veröffentlichungstag und Bekanntmachung des Hinweises auf die Patenterteilung:
**18.06.2003 Patentblatt 2003/25**

(51) Int Cl.⁷: **F21V 8/00**

(21) Anmeldenummer: **00126313.6**

(22) Anmeldetag: **01.12.2000**

(54) **Lichtleiterleuchte mit Abschirmung in zwei Ebenen**

Light guide lamp with shield in two planes

Lampe à guide de lumière à écran à deux plans

(84) Benannte Vertragsstaaten:
**AT BE CH CY DE DK ES FI FR GB GR IE IT LI LU MC NL PT SE TR**

(30) Priorität: **01.12.1999 DE 19957811**

(43) Veröffentlichungstag der Anmeldung:
**27.06.2001 Patentblatt 2001/26**

(73) Patentinhaber: **Siteco Beleuchtungstechnik GmbH**
**83301 Traunreut (DE)**

(72) Erfinder: **Leibig, Joachim**
**83374 Traunwalchen (DE)**

(74) Vertreter: **Schohe, Stefan**
**Forrester & Boehmert**
**Pettenkoferstrasse 20-22**
**80336 München (DE)**

(56) Entgegenhaltungen:
**EP-A- 0 293 182**     **EP-A- 0 846 915**
**WO-A-96/23166**     **US-A- 5 396 350**

**Beschreibung**

Die Erfindung betrifft eine Leuchte mit einem Lichtleiter mit mindestens einer Lichteinkoppelseite, an der von einer oder mehreren Lampen Licht in den Lichtleiter eingekoppelt wird, und mindestens einer von der oder den Lichteinkoppelseiten verschiedenen Lichtauskoppelseite, über die Licht aus dem Lichtleiter ausgekoppelt wird, so daß es über eine Lichtaustrittsfläche der Leuchte abgestrahlt wird, wobei an der Lichtauskoppelseite des Lichtleiters im Strahlengang des austretenden Lichts eine lichtbrechende Struktur vorgesehen ist, welche in mindestens einer Ebene senkrecht zu der Lichtaustrittsfläche eine Abschirmung des an dieser Lichtaustrittsfläche abgestrahlten Lichts erzeugt.

Eine derartige Leuchte ist beispielsweise aus der EP 0 846 915 A1 bekannt. Bei dieser bekannten Leuchte wurden zum Auskoppeln Prismenstrukturen verwendet, wie sie beispielsweise aus WO 95/12782 oder WO 96/23166 bekannt sind. Diese beiden letztgenannten Druckschriften betreffen Hintergrundbeleuchtungen für LCD-Anzeigen oder dgl., mit denen eine möglichst gleichmäßige Lichtverteilung über der Anzeige erreicht werden soll. Es hatte sich überraschenderweise herausgestellt, daß die dort für Hintergrundbeleuchtungen beschriebenen Strukturen in vorteilhafter Weise verwendet werden können, um bei einer Leuchte zur Beleuchtung von Innenräumen eine Abschirmung zu erzeugen, d.h. um zu bewirken, daß die Leuchtdichte in einer Ebene senkrecht zu der Lichtaustrittsfläche oberhalb eines Grenzwinkels zu einer Senkrechten zu der Lichtaustrittsfläche unter einen vorgegebenen Grenzwert fällt. Eine solche Abschirmung wird beispielsweise von den geltenden Normen für Bildschirmarbeitsplätze gefordert. Diese Normen erfordern eine Abschirmung sowohl in einer Ebene parallel zu der Lampenachse als auch in einer Ebene senkrecht zu der Lampenachse, so daß die Prismenstruktur eine Abschirmung in mehrere verschiedene Richtungen leisten muß.

Aus diesem Grunde wurden bislang für derartige Leuchten pyramidenstumpfförmige Prismen verwendet, welche eine Abschirmung in zwei zueinander senkrechten Richtungen ermöglichen. Diese pyramidenstumpfförmigen Prismen haben sich zwar hinsichtlich ihrer Abschirmungseigenschaften bewährt. Nachteilig ist jedoch, daß aufgrund der Pyramidenstumpfform nur ein verhältnismäßig kleiner Anteil der Lichtaustrittsfläche zur Lichtauskopplung in diese Prismen zur Verfügung steht, was zu einem relativ geringen Leuchtenwirkungsgrad führt.

In der europäischen Patentanmeldung 99 110 141.1 wird zwar die Verwendung von linienförmigen Prismenstrukturen vorgeschlagen. Derartige Prismenstrukturen erzeugen jedoch in der Regel nur eine brauchbare Abschirmung in einer Ebene senkrecht zu der Längsrichtung der Prismen, während sie in einer Ebene parallel zu der Längsrichtung der Prismen häufig nicht zu einer Abschirmung führen, die den gängigen Normen z.B. für Bildschirmarbeitsplätze entspricht. Daher wurden für Anwendungen, welche eine Abschirmung in mehreren Ebenen erforderten, zwei senkrecht zueinander angeordnete linienförmige Prismenstrukturen vorgeschlagen, die auf der Lichtauskoppelseite des Lichtleiters übereinander vorgesehen waren. Obwohl sich diese Lösung grundsätzlich bewährt hat, ist für bestimmte Anwendungen die geschichtete Anordnung von zwei Trägern einer Prismenstruktur z.B. aus konstruktiven Gründen oder aufgrund von Vorgaben an die Abmessungen nicht möglich oder nicht erwünscht. Bei Leuchten, bei denen der Lichtleiter eine große Lichtauskoppelfläche aufweist, kommt hinzu, daß die Herstellung von Platten mit solchen Prismenstrukturen teuer ist. Solche Platten lassen sich auch nicht mit beliebig großen Abmessungen herstellen und daher müssen häufig mehrere Platten mit Prismenstrukturen nebeneinander genau justiert vorgesehen werden, um die gesamte Lichtauskoppelfläche des Lichtleiters abzudecken.

EP 0 293 182 A2 beschreibt eine Lichtquelle für einen Overheadprojektor, bei der an einer Grundseite des Lichtleiters, welche gleichzeitig die Lichtaustrittsfläche bildet, eine erste Prismenplatte und an zwei einander gegenüberliegenden Schmalseiten, welche Lichteinkoppelseiten zum Einkoppeln von Licht von jeweils einer Lampe bilden, zweite Prismenplatten angeordnet sind. Die Prismen der ersten und zweiten Prismenplatte sind längliche parallele Prismen mit einem Querschnitt in der Form eines gleichschenkligen Dreiecks, wobei die Prismen der ersten Prismenplatte nach außen und die Prismen der zweiten Prismenplatte zum Inneren des Hohllichtleiters hin weisen. Die Prismen dieser Prismenstrukturen sind so ausgebildet, daß Licht mit nahezu senkrechtem Einfall durch Totalreflexion zurückreflektiert wird. Diese Prismen erzeugen keine Abschirmung. Vielmehr wird das durch sie hindurchtretende Licht zum einen in einen zentralen Bereich mit relativ kleinen Austrittswinkeln zur Senkrechten abgegeben, zum anderen aber auch in zwei Randbereiche bei großen Winkeln zur Senkrechten. Die erste und zweite Prismenplatte sind so angeordnet, daß der überwiegende Teil des in den Hohllichtleiter eingekoppelten Lichts nicht ohne eine Reflexion an einer der Wände des Hohllichtleiters ausgekoppelt wird.

Es ist die Aufgabe der Erfindung, eine Leuchte der eingangs beschriebenen Art zur Verfügung zu stellen, welche bei verbesserter Abschirmung mit einem geringeren Aufwand herstellbar ist.

Erfindungsgemäß wird diese Aufgabe gelöst durch eine Leuchte gemäß Anspruch 1. Bei einen erfindungsgemäßen Leuchte ist mindestens an einer Lichteinkoppelseite eine zweite Abschirmeinrichtung vorgesehen, welche in einer zu der Lichteinkoppelseite nicht parallelen Ebene bei Winkeln bezüglich einer zu dieser Lichteinkoppelseite nicht parallelen Geraden in dieser Ebene oberhalb eines Grenzwinkels die Lichteinkopplung in den Lichtleiter im wesentlichen verhindert, d.h., daß die Lichtstärke bei Winkeln oberhalb dieses Grenzwinkels gegen Null zurückgeht. Ein solcher Grenzwinkel kann in beiden durch die Gerade definierten Halbebenen vorhanden sein. Er kann in den verschiedenen Halbebenen gleich sein und z.B. jeweils 65° betragen, aber auch verschieden sein und in der einen Halbebene beispielsweise 60° und in der anderen Halbebene beispielsweise 30° betragen. Im Rahmen der Erfindung ist es auch z.B. möglich, daß die Lichteinkopplung in den Lichtleiter nur in eine der Halbebenen erfolgt und in die andere Halbebene kein Licht eingekoppelt wird. Die zweite Abschirmeinrichtung bewirkt, daß eine Abschirmung des an der Lichtaustrittsfläche austretenden Lichts in mindestens einer Ebene senkrecht zu der Lichtaustrittsfläche der Leuchte herbeigeführt wird.

Insgesamt erzeugen die erste und zweite Abschirmeinrichtung eine Abschirmung des an der Lichtaustrittsfläche austretenden Lichts zumindest in zwei nicht parallelen Ebenen senkrecht zu der Lichtaustrittsfläche, die vorzugsweise senkrecht zueinander stehen. Insbesondere kann vorgesehen sein, daß die beiden Abschirmeinrichtungen gleichzeitig eine Abschirmung in einer Ebene parallel zu der Achse einer Lampe, welche auf der der zweiten Abschirmeinrichtung zugeordneten Lichteinkoppelseite angeordnet ist, und in einer Ebene senkrecht zu der Achse dieser Lampe bewirken. Beispielsweise kann die erste Abschirmeinrichtung eine Abschirmung in einer Ebene senkrecht zu der Lampenachse bewirken und die zweite Abschirmeinrichtung eine Abschirmung in einer Ebene parallel zu der Lampenachse. Gegebenenfalls kann auch die erste Abschirmeinrichtung in der Ebene parallel zu der Lampenachse eine Abschirmung erzeugen, die jedoch schwächer ist als die von der zweiten Abschirmeinrichtung erzeugte, bzw. die zweite Abschirmeinrichtung kann in der Ebene senkrecht zu der Lampcnachse eine Abschirmung erzeugen, welche schwächer als die von der ersten Abschirmeinrichtung erzeugte ist.

Der Lichtleiter kann ein Hohllichtleiter oder ein Vollichtleiter sein. Die Lichtaustrittsfläche kann mit der Lichtauskoppelseite des Lichtleiters bzw. der zugehörigen Abschirmeinrichtung zusammenfallen.

Eine Abschirmung der Leuchte bedeutet, daß in einer Ebene senkrecht zu der Lichtaustrittsfläche die mittlere Leuchtdichte oberhalb eines Grenzwinkels (Abschirmwinkel) zu einer Senkrechten zu der Lichtaustrittsfläche in dieser Ebene unterhalb eines vorbestimmten Grenzwerts liegt. Bei der erfindungsgemäßen Leuchte kann der Abschirmwinkel in einem Bereich von 45° bis 75°, bevorzugt von 50° bis 65° und besonders bevorzugt von 55° bis 65° liegen. Der besagte Grenzwert der Leuchtdichte kann z. B. entsprechend den derzeit geltenden Normen bzw. Normvorschlägen zur Beleuchtung von Bildschirmarbeitsplätzen bei 200 cd/m$^2$ 500 cd/ m$^2$ oder 1000 cd/ m$^2$ liegen. Die Abschirmung kann auch in einem raumbezogenen Ebenensystem vorgesehen sein, z. B. dem C-Ebenensystem gemäß DIN 5032-1.

Die Erfindung kann vorsehen, daß die zweite Abschirmeinrichtung eine Abschirmung in einer Ebene senkrecht zu der Lichtaustrittsfläche erzeugt, in welcher die erste Abschirmeinrichtung keine oder nur eine schwächere Abschirmung, d.h. eine größere Leuchtdichte bei einem vorgegebenen Winkel, liefert.

Die Erfindung kann vorsehen, daß eine Ebene senkrecht zu der Lichtaustrittsfläche, in welcher die zweite Abschirmeinrichtung eine Abschirmung erzeugt, verschieden von einer Ebene senkrecht zu der Lichtaustrittsfläche ist, in welcher die erste Abschirmeinrichtung eine Abschirmung erzeugt. Vorzugsweise erzeugt die zweite Abschirmeinrichtung die stärkste Abschirmung in einer Ebene, die senkrecht zu derjenigen Ebene steht, in der die erste Abschirmeinrichtung die stärkste Abschirmung erzeugt.

Gemäß einer Ausführungsform der Erfindung kann vorgesehen sein, daß eine Lichtauskoppelseite und eine zugeordnete Lichteinkoppelseite aneinander angrenzen und mit einander einen nicht verschwindenden Winkel, insbesondere einen rechten Winkel, einschließen. Dabei kann insbesondere die erste Abschirmeinrichtung einen nicht verschwindenden Winkel mit der zweiten Abschirmeinrichtung einschließen. Gemäß einer besonderen Ausführungsform schließen die erste und zweite Abschirmeinrichtung miteinander einen rechten Winkel ein.

Die Lichteinkoppelseite kann insbesondere eine Schmalseite des Lichtleiters sein und/oder die Lichtauskoppelseite eine Grundseite des Lichtleiters sein. Gemäß einer Ausführungsform der Erfindung kann die zweite Abschirmeinrichtung ein oder mehrere den Einstrahlwinkel in den Lichtleiter begrenzende Blenden aufweisen.

Dabei kann vorgesehen sein, die zweite Abschirmeinrichtung ein Raster von lamellenförmigen Blenden umfaßt, ähnlich, wie sie gängerweise zur Abschirmung in einer Lichtaustrittsöffnung von herkömmlichen Leuchten verwendet werden.

Die Erfindung kann auch vorsehen, daß die zweite Abschirmeinrichtung eine lichtbrechende Struktur umfaßt, welche zum Erzeugen einer Abschirmung des sie durchsetzenden Lichts in mindestens in einer Ebene senkrecht zu der Lichteinkoppelseite geeignet ist.

Die lichtbrechende Struktur der ersten und/oder zweiten Abschirmeinrichtung besteht vorzugsweise aus Prismen oder aus prismenähnlichen Elementen, die gemäß einer besonderen Ausführungsform eine längliche Form aufweisen und im Querschnitt mindestens zwei einander gegenüber liegende, zueinander geneigte Seiten aufweisen. Die Prismen oder prismenähnlichen Elemente definieren gemäß einer Ausführungsform der Erfindung dabei ein Linienmuster aus kreuzungsfreien Linien zumindest auf einem Abschnitt des Bauteils, in dem die Struktur ausgebildet ist, wobei die Erstreckung dieser Elemente in Richtung dieser Linien vorzugsweise wesentlich größer als in der Richtung senkrecht dazu ist. Die Form des Linienmusters richtet sich im wesentlichen nach der gewünschten Abschirmung. Gemäß einer Ausführungsform der Erfindung sind die Linien zueinander parallel und vorzugsweise gerade. Der Querschnitt der Prismen kann insbesondere dreieckig sein, aber auch eine Polygonform haben. An dem freien Ende könne die Prismen eine Spitze aufweisen. Es kommen jedoch auch Prismen mit einem abgeflachten Ende, beispielsweise mit einer trapezförmigen Querschnitt in Betracht. Es kann auch vorgesehen sein, daß die erste und/oder zweite Abschirmeinrichtung pyramidenstumpfförmige Prismenstrukturen aufweist, wie sie eingangs erwähnt wurden.

Vorzugsweise sind die besagten länglichen Elemente so ausgebildet, daß sie in der Ebene senkrecht zu ihrer Längsrichtung eine Abschirmung bzw. die stärkste Abschirmung erzeugen.

Gemäß einer Ausführungsform kann die lichtbrechende Struktur der ersten und/oder zweiten Abschirmeinrichtung längliche, parallele Prismenelemente oder prismenähnliche Elemente aufweisen, welche bezüglich einer Längsachse einen translationsinvarianten Querschnitt besitzen. Dabei kann die Längsachse der Prismen der ersten Abschirmeinrichtung parallel zu einer Lampenachse sein und/oder die Längsachse der Prismen der zweiten Abschirmeinrichtung senkrecht zu einer Lampenachse stehen.

Die Erfindung kann vorsehen, daß die Längsachsen der Prismen der zweiten Abschirmeinrichtung, wenn man die Ebene der zweiten Abschirmeinrichtung um die Schnittgerade mit der Ebene der ersten Abschirmeinrichtung so dreht, daß die Ebene der ersten und zweiten Abschirmeinrichtung parallel zueinander sind, nicht parallel zu den Längsachsen der Prismen der ersten Abschirmeinrichtung ist. Dies bedeutet, daß die Prismen in unterschiedlichen Richtungen ihre Abschirmung oder ihre hauptsächliche Abschirmung erzeugen. Vorzugsweise stehen die beiden Längsachsen nach der besagten Rotation der Ebene der zweiten Abschirmeinrichtung in die Ebene der ersten Abschirmeinrichtung senkrecht aufeinander. Allgemeiner deckt sich das vorangehend erwähnte Linienmuster der lichtbrechenden Struktur der zweiten Abschirmeinrichtung nach der besagten Rotation nicht mit dem entsprechenden Linienmuster der lichtbrechenden Struktur der ersten Abschirmeinrichtung, wobei bei einer bevorzugten Ausführungsform die Linien der lichtbrechenden Struktur der zweiten Abschirmeinrichtung nicht parallel zu den Linien der lichtbrechenden Struktur der ersten Abschirmeinrichtung sind.

Es kann vorgesehen sein, daß die Längsachse der Prismen der ersten Abschirmeinrichtung und die Längsachse der Prismen der zweiten Abschirmeinrichtung eine Ebene aufspannen, auf welcher die Lampenachse der der zweiten Abschirmeinrichtung zugeordneten Lampe nicht senkrecht steht, sondern mit dieser einen Winkel von weniger als 90° einschließt und vorzugsweise parallel zu der Lampenachse ist.

Die lichtbrechende Struktur der zweiten Abschirmeinrichtung kann insbesondere an oder in einer Wand des Lichtleiters ausgebildet sein. Die lichtbrechende Struktur kann an der Wand beispielsweise dadurch angebracht werden, daß eine Folie oder ein anderes Element, welches die besagte Struktur enthält, auf die Wand aufgeklebt ist. Eine lichtbrechende Struktur kann in der Wand beispielsweise durch entsprechendes Formen der Wand oder Gravieren der Wand erzeugt werden.

Die lichtbrechende Struktur der ersten und/oder zweiten Abschirmeinrichtung ist vorzugsweise in einer Platte oder einer Folie ausgebildet, welche an einer Seite des Lichtleiters, z.B. an einer Schmalseite oder einer Grundseite angebracht ist. Im Falle von Volllichtleitern sind Folien bevorzugt, die an den Lichtleiter angeklebt werden. Im Falle eines Hohllichtleiters ist gemäß einer Ausführungsform die Prismenstruktur in einer Platte ausgebildet, welche gleichzeitig den Hohlraum des Hohllichtleiters begrenzt. Statt einer separaten Platte kann die Prismenstruktur auch in einer Wand des Hohllichtleiters ausgebildet sein, welche einteilig mit anderen Wänden des Hohllichtleiters ausgebildet, ist oder eine Folie mit der Struktur kann auf eine solche Wand aufgeklebt sein.

Insbesondere kann vorgesehen sein, daß eine strukturierte Oberfläche einer lichtbrechenden Struktur der zweiten Abschirmeinrichtung zu dem Inneren des Lichtleiters hin weist.

Beispielsweise kann die lichtbrechende Struktur auf einer Seite einer Kunststoffolie ausgebildet sein und mit dieser Seite an einer Wand eines Voll- oder Hohllichtleiters angeklebt sein. Sie kann beispielsweise auch in einer transparenten Platte ausgebildet sein, welche eine seitliche Öffnung eines Hohllichtleiters verschließt, wobei die Seite mit der lichtbrechenden Struktur auf der Seite des Hohlraums liegt. Grundsätzlich kann jedoch auch die lichtbrechende Struktur nach außen, also von dem Lichtleiter weg, weisen. Die zweite Abschirmeinrichtung kann auch mehrere Prismenstrukturen aufweisen, von denen eine auf der von dem inneren des Lichtleiters wegweisenden Seite eines Trägers und die andere auf der zum Inneren des Lichtleiters weisenden Seite eines Trägers liegt.

In gleicher Weise kann die lichtbrechende Struktur der ersten Abschirmeinrichtung nach außen, also von dem Hohlraum weg weisen. Sie kann jedoch auch zu dem Hohlraum hin gerichtet sein.

Weitere Merkmale und Vorteile der Erfindung ergeben sich aus der nachfolgenden Beschreibung von Ausführungsbeispielen der Erfindung anhand der beigefügten Zeichnungen.

Fig. 1    zeigt eine perspektivische Ansicht eines Ausführungsbeispiels einer erfindungsgemäßen Leuchte,

Fig. 2    zeigt einen Querschnitt der Leuchte gemäß Fig. 1 entlang der Linie II - II,

Fig. 3    zeigt einen Querschnitt der Leuchte gemäß Fig. 1 entlang der Linie III - III in Fig. 2,

Fig. 4    zeigt eine Prismenplatte der ersten oder zweiten Abschirmeinrichtung,

Fig. 5    zeigt einen Querschnitt eines weiteren Ausführungsbeispiels einer erfindungsgemäßen Leuchte ähnlich demjenigen der Fig. 3.

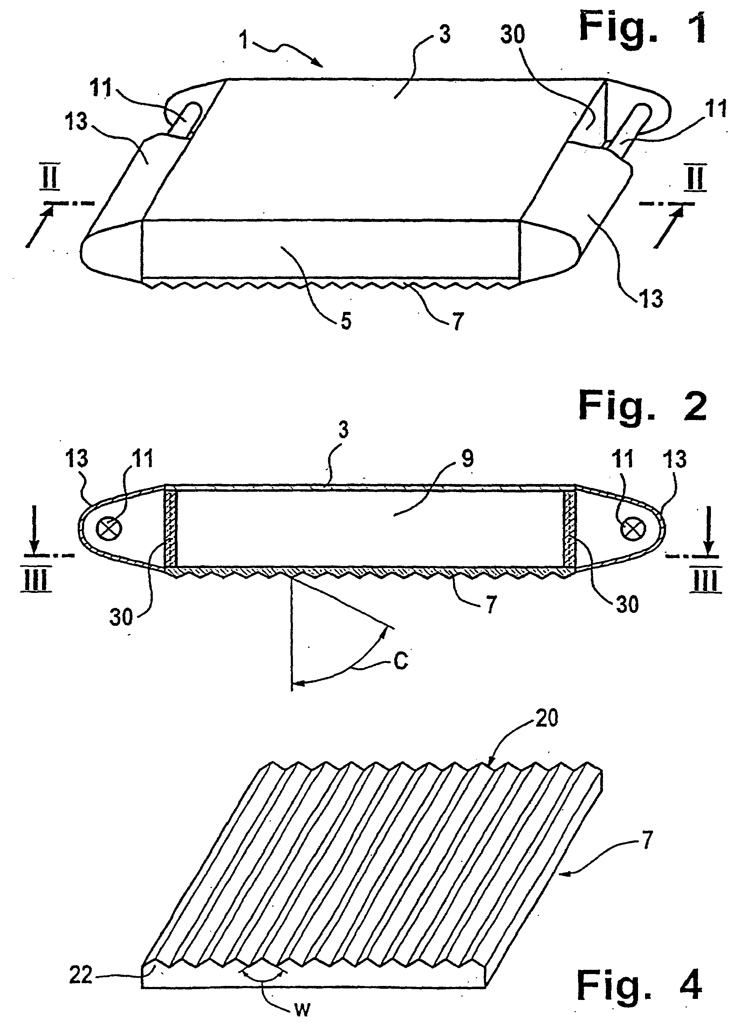

Die in Fig. 1 schematisch dargestellte Leuchte weist einen allgemein mit 1 bezeichneten quaderförmigen Hohllichtleiter auf, der von einer reflektierenden Deckenwand 3 und reflektierenden Seitenwänden 5 an zwei einander gegenüberliegenden Schmalseiten sowie einer klaren lichtdurchlässigen Prismenplatte 7 an seiner Unterseite gebildet wird. Die vorangehend genannten Elemente bilden zwischen sich einen Hohlraum 9. An den beiden verbleibenden Schmalseiten des Lichtleiters 1 sind jeweils Lampen 11 angeordnet, welche über diese Schmalseiten Licht in den Hohlraum 9 des Lichtleiters 1 einkoppeln. Um die Lichteinkopplung zu verbessern, sind den Lampen 11 jeweils Reflektoren 13 zugeordnet, welche das auf sie einfallende Licht zu den besagten Schmalseiten reflektieren. Die Reflektoren 13 können hierfür in bekannter Weise optimiert, z.B. in einer Evolventenform ausgebildet sein.

Die Prismenplatte 7 weist an einer Oberfläche eine Prismenstruktur 20 aus parallelen, linearen Prismen 22 mit einem in Längsrichtung konstanten Querschnitt in der Form eines Dreiecks auf. Die Längsrichtung dieser Prismen ist, wie aus Fig. 1 ersichtlich, parallel zu der Längsachse der Lampen 11. Die Prismen 22 bewirken in der Richtung quer zu ihrer Längsrichtung eine Abschirmung, wobei zwischen dem Abschirmwinkel C und dem Prismenwinkel w für eine Grenzfläche zu Luft die folgenden Relationen bestehen:

$$w/2 \leq C \tag{1}$$

$$w \geq 2\,(2\,\arcsin(1/n) + 90)/3 \tag{2}$$

$$\tan(w/2) \leq (n\,\sin(\arcsin(1/n) - 3\,w/2) + \cos(w/2)) / (n\,\cos(\arcsin(1/n) - 3\,w/2) +$$

$$\sin(w/2)), \tag{3}$$

wobei n der Brechungsindex der Prismenplatte ist. Die Prismenplatte 7 kann aus einem gängigen klaren Material, z. B. Polymethylmethacrylat, Polyester oder Polycarbonat bestehen.

Der Querschnitt der Prismen muß nicht notwendig dreieckig sein, sondern kann beispielsweise auch allgemein die Form eines Polygonzuges haben. Die Prismen 22 können ggf. auch gekrümmte Seitenwände aufweisen und/oder eine flache Stirnfläche anstelle einer scharfen Kante aufweisen. Wichtig ist, daß sie die vorangehend erwähnte Abschirmung in der Richtung quer zu ihrer Längsrichtung bewirken.

Das Licht, das von den Lampen 11 in den Hohlraum 9 eingekoppelt wird, wird, soweit es nicht direkt auf die Prismenplatte 7 einfällt, von der Dachwand 3 und den Seitenwänden 5 reflektiert und fällt zum überwiegenden Teil nach einer oder mehreren Reflexionen ebenfalls auf die Prismenplatte 7 ein. Das auf die Prismenplatte 7 einfallende Licht wird teilweise in den Hohlraum 9 zurückreflektiert und teilweise durch Lichtbrechung aus dem Hohlraum 9 ausgekoppelt, wobei das Licht, das aus der Prismenplatte 7, die bei diesem Ausführungsbeispiel gleichzeitig die Lichtaustrittsfläche der Leuchte bildet, austritt, oberhalb des Abschirmwinkels C in einer Ebene senkrecht zu der Längsrichtung der Prismen 22 oder, was gleichbedeutend ist, senkrecht zu der Lampenachse abgeschirmt wird.

Zur Abschirmung in der hierzu orthogonalen Ebene parallel zu der Lampenachse und senkrecht zu der Prismenplatte 7 weist die erfindungsgemäße Leuchte an den beiden den Lampen 11 zugewandten Schmalseiten des Lichtleiters 1 zwei weitere transparente klare Prismenplatten 30 auf, welche zwischen den Lampen 11 und dem Hohlraum 9 senkrecht zu der Prismenplatte 7 angeordnet sind und den Hohlraum 9 auf diesen Schmalseiten abschließen. Diese Prismenplatten 30 sind wie die Prismenplatten 7 aufgebaut und weisen ebenfalls eine Prismenstruktur mit parallel angeordneten länglichen Prismen 32 auf, die im Falle dieses Ausführungsbeispiels ebenfalls, wie in Fig. 4 für die Prismenplatte 7 dargestellt, im Querschnitt eine Dreiecksform haben. Die Längsachse dieser Prismen 32 ist senkrecht zu der Achse der Lampen 11 und zu der ersten Prismenplatte 7 angeordnet. Die Prismenplatten 30 erzeugen entsprechend den vorangehend genannten Formeln (1) bis (3) ebenfalls eine Abschirmung in einer Ebene senkrecht zu den Längsachse der Prismen 20 und begrenzen damit die Winkelbereiche, unter denen Licht effektiv in den Hohlraum 9 eingestrahlt wird. Dies führt zu einer Abschirmung des über die Platte 7 austretenden Lichts in einer Ebene parallel zu der Lampenachse und senkrecht zu der Platte 7. Auf diese Weise wird eine Abschirmung in zwei Ebenen erreicht, allerdings mit einem geringeren Aufwand als nach dem Stand der Technik, da die zweite Prismenplatte 30 eine wesentlich kleinere Fläche hat als die Lichtaustrittsfläche. Es versteht sich von selbst, daß der Prismenwinkel w der Prismen 32 verschieden von demjenigen der Prismen 22 sein kann und die Prismen 32 auch eine andere Form als die Prismen 22 haben können.

Zur Illustration der Abschirmung ist in der in Anhang A beigefügten Tabelle I für verschiedene C-Ebenen (Ebenen senkrecht zur Lichtaustrittsfläche) die Lichtstärke für verschiedene Winkel zu der Senkrechten zu der Lichtaustrittsfläche aufgelistet. Man erkennt deutlich den starken Abfall der Lichtstärke in der C0/180-Ebene oberhalb von 45° auf mehr als ein Viertel. Ein ähnlicher Abfall läßt sich auch in den anderen Ebenen erkennen. In der C90/270-Ebene ist der Abfall weniger steil ausgeprägt. Man erkennt jedoch auch hier, daß oberhalb von ca. 60 - 65° die Lichtstärke deutlich abfällt. Mit dem Abfall der Lichtstärke geht ein Abfall der Leuchtdichte einher, der zu der besagten Abschirmung führt.

Zur Erzeugung einer Abschirmung in der zweiten Ebene muß nicht notwendig eine zweite Prismenstruktur verwendet werden, wie sie in der Prismenplatte 30 ausgebildet ist. Statt dessen können auch konventionelle Mittel zur Abschirmung verwendet werden, welche den Hauptstrahlengang des Lichts beim Einkoppeln in den Lichtleiter auf einen bestimmten Winkelbereich begrenzen.

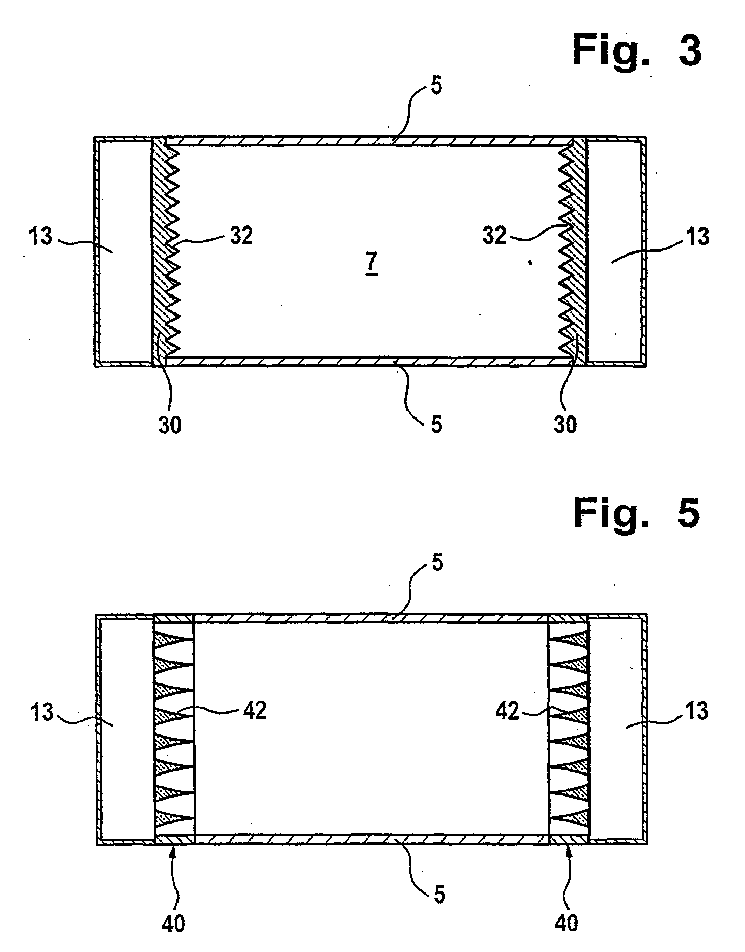

Fig. 5 zeigt eine Ausführungsform einer erfindungsgemäßen Leuchte, bei der anstelle einer Prismenstruktur ein Lamellenraster 40 mit Lamellen 42 verwendet wird, die senkrecht zu der Lampenachse und zu der Prismenplatte 7 orientiert sind. Das Lamellenraster 40 bewirkt in bekannter Weise eine Abschirmung des in den Hohlraum 9 eingekoppelten Lichts in der Ebene senkrecht zu den Lamellen 42 und damit eine Abschirmung des über die Platte 7 austretenden Lichts der Leuchte in einer Ebene parallel zu der Lampenachse und senkrecht zu der Platte 7.

Die vorangehend beschriebenen Ausführungsformen sind lediglich beispielhaft und können in verschiedener Hinsicht abgewandelt werden. Beispielsweise kann anstelle einer zweiseitigen Einstrahlung von Licht in den Hohlraum 9 auch nur eine einseitige Lichteinkopplung vorgesehen sein. In diesem Fall fällt eine der Lampen 11 weg und die entsprechende Seite des Hohllichtleiters 1 wird durch eine reflektierende Seitenwand, ähnlich den Seitenwänden 5 verschlossen. Die Form des Hohllichtleiters muß nicht notwendig quaderförmig sein. Beispielsweise kann die Deckenwand 3 nach innen gewölbt oder anderweitig nach innen vertieft sein. Zum Beispiel kann die Deckenwand aus zwei geraden, zu der Lichtauskoppelseite geneigten Abschnitten bestehen, die in einem Winkel aneinander angrenzen. Generell kann vorgesehen sein, daß sich die Höhe des Hohlraums, also der Abstand zwischen der Deckenwand und der Lichtauskoppelseite, ausgehend von der Seite einer Lampe in der Richtung zu der gegenüberliegenden Seite zumindest abschnittsweise verringert. Bei einer einseitigen Lichteinkopplung kann es vorteilhaft sein, wenn sich die Höhe monoton verringert. Bei einer Lichteinkopplung von zwei einander gegenüberliegenden Seiten kann es vorteilhaft sein, wenn die Höhe von beiden Seiten ausgehend kontinuierlich bis zu einem Punkt minimaler Höhe oder bis zu einem Zentralbereich konstanter Höhe abnimmt. Anstelle der dargestellten Prismen können auch andere lichtbrechende Strukturen verwendet werden, welche eine Abschirmung erzeugen. Statt der vorangehend erwähnten Lamellen oder Prismen als Elemente der zweiten Abschirmeinrichtung können auch andere Einrichtungen vorgesehen sein, welche den Winkelbereich, in den der Hauptanteil des von der bzw. den Lampen 11 in den Hohlraum 9 eingekoppelten Lichts eingestrahlt wird, beschränkt, beispielsweise durch die fokussierende oder defokussierende Wirkung einer Linse oder einer Anordnung von Mikrolinsen.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

## Anhang A

### Tabelle I

| C-Ebenen | 0° 180° 195° 345° | 15° 165° 210° 330° | 30° 150° 225° 315° | 45° 135° 240° 300° | 60° 120° 255° 285° | 75° 105° 255° | 90° 270° |
|---|---|---|---|---|---|---|---|
| γ | Lichtstärke in cd/klm | | | | | | |
| 0° | 221 | 221 | 221 | 221 | 221 | 221 | 221 |
| 5° | 212 | 213 | 214 | 211 | 217 | 219 | 220 |
| 10° | 218 | 216 | 209 | 208 | 209 | 214 | 217 |
| 15° | 224 | 220 | 213 | 198 | 194 | 194 | 204 |
| 20° | 243 | 236 | 219 | 189 | 181 | 175 | 185 |
| 25° | 284 | 272 | 240 | 201 | 172 | 174 | 169 |
| 30° | 303 | 293 | 263 | 218 | 168 | 160 | 150 |
| 35° | [355] | 338 | 282 | 238 | 167 | 150 | 134 |
| 40° | 343 | 329 | 307 | 248 | 172 | 136 | 104 |
| 45° | 324 | 306 | 285 | 233 | 179 | 113 | 88 |
| 50° | 68 | 78 | 113 | 177 | 152 | 91 | 77 |
| 55° | 41 | 43 | 49 | 55 | 59 | 75 | 59 |
| 60° | 18 | 22 | 31 | 37 | 34 | 27 | 42 |
| 65° | 12 | 13 | 19 | 21 | 26 | 18 | 23 |
| 70° | 10 | 8 | 8 | 13 | 16 | 13 | 7 |
| 75° | 11 | 9 | 6 | 7 | 9 | 7 | 5 |
| 80° | 5 | 5 | 5 | 4 | 5 | 3 | 3 |
| 85° | 2 | 2 | 2 | 1 | 1 | 1 | 1 |
| 90° | 0 | 0 | 0 | 0 | 0 | 0 | 0 |
| 95° | 0 | 0 | 0 | 0 | 0 | 0 | 0 |
| 100° | 0 | 0 | 0 | 0 | 0 | 0 | 0 |
| 105° | 0 | 0 | 0 | 0 | 0 | 0 | 0 |
| 110° | 0 | 0 | 0 | 0 | 0 | 0 | 0 |
| 115° | 0 | 0 | 0 | 0 | 0 | 0 | 0 |
| 120° | 0 | 0 | 0 | 0 | 0 | 0 | 0 |
| 125° | 0 | 0 | 0 | 0 | 0 | 0 | 0 |
| 130° | 0 | 0 | 0 | 0 | 0 | 0 | 0 |
| 135° | 0 | 0 | 0 | 0 | 0 | 0 | 0 |
| 140° | 0 | 0 | 0 | 0 | 0 | 0 | 0 |
| 145° | 0 | 0 | 0 | 0 | 0 | 0 | 0 |
| 150° | 0 | 0 | 0 | 0 | 0 | 0 | 0 |
| 155° | 0 | 0 | 0 | 0 | 0 | 0 | 0 |
| 160° | 0 | 0 | 0 | 0 | 0 | 0 | 0 |
| 165° | 0 | 0 | 0 | 0 | 0 | 0 | 0 |
| 170° | 0 | 0 | 0 | 0 | 0 | 0 | 0 |
| 175° | 0 | 0 | 0 | 0 | 0 | 0 | 0 |
| 180° | 0 | 0 | 0 | 0 | 0 | 0 | 0 |

[___] maximale Lichtstärke

EP 1 111 298 B1

Bezugzeichenliste

| | |
|---|---|
| 1 | Lichtleiter |
| 3 | Deckenwand |
| 5 | Seitenwand |
| 7 | Prismenplatte |
| 9 | Hohlraum |
| 11 | Lampe |
| 13 | Reflektor |
| 20 | Prismenstruktur |
| 22 | Prisma |
| 30 | Prismenplatte |
| 32 | Prisma |
| 40 | Lamellenraster |
| 42 | Lamelle |
| C | Abschirmwinkel |
| w | Prismenwinkel |

**Patentansprüche**

1. Leuchte mit einem Lichtleiter (1) mit mindestens einer Lichteinkoppelseite, an der von einer oder mehreren Lampen (11) Licht in den Lichtleiter (1) eingekoppelt wird, und mindestens einer von der oder den Lichteinkoppelseiten verschiedenen Lichtauskoppelseite, über die Licht aus dem Lichtleiter (1) zum Austritt aus einer Lichtaustrittsfläche der Leuchte ausgekoppelt wird, wobei an der Lichtauskoppelseite des Lichtleiters (1) im Strahlengang des von der Leuchte abgestrahlten Lichts eine erste Abschirmeinrichtung (7) mit einer lichtbrechenden Struktur (20) vorgesehen ist, welche in mindestens einer Ebene senkrecht zu der Lichtaustrittsfläche der Leuchte eine Abschirmung des an dieser Lichtaustrittsfläche abgestrahlten Lichts erzeugt, wobei mindestens an einer Lichteinkoppelseite eine zweite Abschirmeinrichtung (30; 40) vorgesehen ist, welche in einer zu der Lichteinkoppelseite nicht parallelen Ebene die Lichteinkopplung in den Lichtleiter (1) bei Winkeln oberhalb eines Grenzwinkels bezüglich einer zu der Lichteinkoppelseite nicht parallelen Geraden in der besagten Ebene im wesentlichen verhindert und dadurch bewirkt, daß eine Abschirmung des an der Lichtaustrittsfläche austretenden Lichts in mindestens einer Ebene senkrecht zu der Lichtaustrittsfläche der Leuchte herbeigeführt wird, wobei durch die erste und zweite Abschirmeinrichtung in mindestens zwei nicht parallelen Ebenen senkrecht zu der Lichtaustrittsfläche der Leuchte eine Abschirmung erzeugt wird, wobei die Lichtbrechende Struktur der ersten Abschirmeinrichtung Längliche parallele Prismen (22) aufweist und die zweiten Abschirmeinrichtung eine lichtbrechende Struktur mit länglichen parallelen Prismen (32) oder eine oder mehrere den Einstrahlwinkel in den Lichtleiter begrenzende Blenden (42) aufweist wobei die Längsachse der Prismen (22) der ersten Abschirmeinrichtung und die Längsachse der Prismen (32) bzw. Blenden (42) der zweiten Abschirmeinrichtung zusammen eine Ebene aufspannen, auf welcher die Lampenachse einer Lampe auf der Lichteinkoppelseite, welcher die zweite Abschirmeinrichtung zugeordnet ist, nicht senkrecht steht, ausgenommen Leuchten zu Auzeigezwecken.

2. Leuchte nach Anspruch 1, **dadurch gekennzeichnet, daß** die Ebene senkrecht zu der Lichtaustrittsfläche, in welcher die zweite Abschirmeinrichtung die stärkste Abschirmung erzeugt, verschieden von der Ebene senkrecht zu der Lichtaustrittsfläche ist, in welcher die erste Abschirmeinrichtung die stärkste Abschirmung erzeugt.

3. Leuchte nach Anspruch 1 oder 2, **dadurch gekennzeichnet, daß** die zweite Abschirmeinrichtung (30; 40) eine Abschirmung in einer Ebene senkrecht zu der Lichtaustrittsfläche erzeugt, in welcher die erste Abschirmeinrichtung keine oder nur eine schwächere Abschirmung liefert.

4. Leuchte nach einem der Ansprüche 1 bis 3, **dadurch gekennzeichnet, daß** eine Lichtauskoppelseite und eine zugeordnete Lichteinkoppelseite aneinander angrenzen und miteinander einen nicht verschwindenden Winkel einschließen.

5. Leuchte nach Anspruch 1, **dadurch gekennzeichnet, daß** die zweite Abschirmeinrichtung ein Raster (40) von lamellenförmigen Blenden (42) umfaßt.

8

6.  Leuchte nach einem der Ansprüche 1 bis 5, **dadurch gekennzeichnet, daß** die lichtbrechende Struktur der ersten und/oder zweiten Abschirmeinrichtung längliche parallele Prismen (22, 32) aufweist, welche bezüglich einer Längsachse einen translationsinvarianten Querschnitt besitzen.

7.  Leuchte nach Anspruch 6, **dadurch gekennzeichnet, daß** die Längsachse der Prismen (22) der ersten Abschirmeinrichtung parallel zu einer Lampenachse ist und/oder die Längsachse der Prismen (32) der zweiten Abschirmeinrichtung senkrecht zu einer Lampenachse steht.

8.  Leuchte nach Anspruch 1, **dadurch gekennzeichnet, daß** die Längsachse der Prismen der ersten Abschirmeinrichtung mit der Längsachse der Prismen der zweiten Abschirmeinrichtung eine Ebene aufspannt, die parallel oder im wesentlichen parallel zu einer Lampenachse einer Lampe auf der Lichteinkoppelseite ist, welcher die zweite Abschirmeinrichtung zugeordnet ist.

9.  Leuchte nach einem der Ansprüche 1 bis 8, **dadurch gekennzeichnet, daß** die lichtbrechende Struktur der zweiten Abschirmeinrichtung (30) an oder in einer Wand des Lichtleiters ausgebildet ist.

10. Leuchte nach Anspruch 9, **dadurch gekennzeichnet, daß** eine lichtbrechende Struktur der zweiten Abschirmeinrichtung (30) zu dem Inneren des Lichtleiters hin weist.

11. Leuchte nach einem der Ansprüche 1 bis 10, **dadurch gekennzeichnet, daß** die erste Abschirmeinrichtung in einem Leuchtenteil ausgebildet, welches in einer Ebene senkrecht zu der Ebene des Leuchtenteils liegt, in welchem die zweite Abschirmeinrichtung ausgebildet ist.

**Claims**

1.  A lamp comprising an optical waveguide (1) with at least one light input side where one or more lamps (11) input light into the optical waveguide (1) and at least one light output side different from the light input side or sides and via which the light from the optical waveguide (1) is output from a light exit surface of the lamp, wherein a first screening device (7) with a light-refracting structure (20) is provided in the path of the light radiated by the lamp on the light output side of the optical waveguide (1) and screens the light radiated from the light exit surface in at least one plane perpendicular thereto, wherein a second screening device (30; 40) is provided on at least one light input side and, in a plane not parallel to the light input side, substantially prevents input of light into the optical waveguide (1) at angles above a critical angle relative to a straight line in the said plane not parallel to the light input side, with the result that the light leaving the light exit surface is screened in at least one plane at right angles to the said light exit surface of the lamp, wherein the first and second screening devices provide a screen in at least two non-parallel planes at right angles to the light exit surface of the lamp, wherein the light-refracting structure of the first screening device comprises elongate parallel prisms (22) and the second screening device has a light-refracting structure with elongate parallel prisms (322) or one or more shutters (42) which limit the angle of irradiation into the optical waveguide, wherein the longitudinal axis of the prisms (22) of the first screening device and the longitudinal axis of the prisms (32) or shutters (42) of the second screening device together span a plane on which the axis of a lamp on the light input side associated with the second screening device is not perpendicular, apart from lamps for indicating purposes.

2.  A lamp according to claim 1, **characterised in that** the plane at right angles to the light exit surface in which the second screening device has the strongest screening effect is different from the plane at right angles to the light exit surface in which the first screening device has the strongest screening effect.

3.  A lamp according to claim or 2, **characterised in that** the second screening device (30; 40) screens in a plane at right angles to the light exit surface in which the first screening device has a weaker or no screening effect.

4.  A lamp according to any of claims 1 to 3, **characterised in that** a light output side and an associated light input side adjoin one another and together include a non-vanishing angle.

5.  A lamp according to claim 1, **characterised in that** the second screening effect comprises an array (40) of lamellar shutters (42).

6.  A lamp according to any of claim 1 to 5, **characterised in that** the light-refracting structure of the first and/or second screening device comprises elongate parallel prisms (22, 32) having a cross-section which does not vary in translation relative to a longitudinal axis.

7.  A lamp according to claim 6, **characterised in that** the longitudinal axis of the prisms (22) in the first screening device is parallel to a lamp axis and/or the longitudinal axis of the prisms (32) of the second screening device is at right angles to a lamp axis.

8.  A lamp according to claim 1, **characterised in that** the longitudinal axis or the prisms of the first screening device and the longitudinal axis of the prisms of the second screening device span a plane parallel or substantially parallel to an axis of a lamp on the light input side associated with the second screening device.

9.  A lamp according to any of claims 1 to 8, **characterised in that** the light-refracting structure of the second screening device (30) is formed on or in a wall of the optical waveguide.

10. A lamp according to claim 9, **characterised in that** a light-refracting structure of the second screening device (30) points towards the interior of the optical waveguide.

11. A lamp according to any of claims 1 to 10, **characterised in that** the first screening device is formed in a part of the lamp in a plane at right angles to the plane of that part of the lamp in which the second screening device is formed.

**Revendications**

1.  Luminaire comportant un conduit de lumière (1) ayant au moins un côté d'injection de lumière sur lequel la lumière d'une ou de plusieurs lampes (11) est injectée dans le conduit de lumière (1), et au moins un côté d'éjection de lumière différent du ou des côté(s) d'injection de lumière et par lequel la lumière est éjectée du conduit de lumière (1) pour sortir d'une surface de sortie de lumière du luminaire, sur le côté d'éjection de lumière du conduit de lumière (1) étant prévu sur le trajet des rayons de la lumière émise par le luminaire un premier dispositif de masquage (7) ayant une structure réfringente (20) qui produit dans au moins un plan perpendiculaire à la surface de sortie de lumière du luminaire un masquage de la lumière émise à cette surface de sortie de lumière, au moins sur un côté d'injection de lumière étant prévu un deuxième dispositif de masquage (30 ; 40) qui empêche sensiblement, dans un plan non parallèle au côté d'injection de lumière, l'injection de lumière dans le conduit de lumière (1) sous des angles au-dessus d'un angle limite par rapport à une droite non parallèle au côté d'injection de lumière située dans ledit plan et fait ainsi qu'un masquage de la lumière sortant à la surface de sortie de lumière soit produit dans au moins un plan perpendiculaire à la surface de sortie de lumière du luminaire, le premier et le deuxième dispositifs de masquage produisant alors un masquage dans au moins deux plans non parallèles perpendiculaires à la surface de sortie de lumière du luminaire, la structure réfringente du premier dispositif de masquage présentant des prismes parallèles allongés (22), et le deuxième dispositif de masquage présentant une structure réfringente à prismes parallèles allongés (32) ou un ou plusieurs diaphragmes (42) limitant l'angle d'incidence dans le conduit de lumière, l'axe longitudinal des prismes (22) du premier dispositif de masquage et l'axe longitudinal des prismes (32) ou diaphragmes (42) du deuxième dispositif de masquage formant ensemble un plan sur lequel l'axe d'une lampe n'est pas perpendiculaire au côté d'injection de lumière auquel est associé le deuxième dispositif de masquage, excepté les luminaires pour indications.

2.  Luminaire selon la revendication 1, **caractérisé par le fait que** le plan perpendiculaire à la surface de sortie de lumière dans lequel le deuxième dispositif de masquage produit le plus fort masquage est différent du plan perpendiculaire à la surface de sortie de lumière dans lequel le premier dispositif de masquage produit le plus fort masquage.

3.  Luminaire selon l'une des revendications 1 et 2, **caractérisé par le fait que** le deuxième dispositif de masquage (30 ; 40) produit un masquage dans un plan perpendiculaire à la surface de sortie de lumière dans lequel le premier dispositif de masquage ne produit pas de masquage ou produit un masquage plus faible.

4.  Luminaire selon l'une des revendications 1 à 3, **caractérisé par le fait qu'**un côté d'éjection de lumière et un côté d'injection de lumière associé sont contigus et font entre eux un angle non minime.

5.  Luminaire selon la revendication 1, **caractérisé par le fait que** le deuxième dispositif de masquage comprend un réseau (40) de diaphragmes en forme de lamelle (42).

6. Luminaire selon l'une des revendications 1 à 5, **caractérisé par le fait que** la structure réfringente du premier et/ou du deuxième dispositif de masquage présente des prismes parallèles allongés (22, 32) qui ont par rapport à un axe longitudinal une section invariante en translation.

7. Luminaire selon la revendication 6, **caractérisé par le fait que** l'axe longitudinal des prismes (22) du premier dispositif de masquage est parallèle à un axe de lampe et/ou l'axe longitudinal des prismes (32) du deuxième dispositif de masquage est perpendiculaire à un axe de lampe.

8. Luminaire selon la revendication 1, **caractérisé par le fait que** l'axe longitudinal des prismes du premier dispositif de masquage forme avec l'axe longitudinal des prismes du deuxième dispositif de masquage un plan qui est parallèle ou sensiblement parallèle à l'axe d'une lampe sur le côté d'injection de lumière auquel est associé le deuxième dispositif de masquage.

9. Luminaire selon l'une des revendications 1 à 8, **caractérisé par le fait que** la structure réfringente du deuxième dispositif de masquage (30) est formée sur ou dans une paroi du conduit de lumière.

10. Luminaire selon la revendication 9, **caractérisé par le fait qu'**une structure réfringente du deuxième dispositif de masquage (30) est dirigée vers l'intérieur du conduit de lumière.

11. Luminaire selon l'une des revendications 1 à 10, **caractérisé par le fait que** le premier dispositif de masquage est formé dans une partie du luminaire qui est située dans un plan perpendiculaire au plan de la partie du luminaire dans laquelle est formé le deuxième dispositif de masquage.

**Fig. 1**

1 · 3 · 30

11 · 11

13 · 13

II · II

5 · 7

**Fig. 2**

3

13 · 11 · 9 · 11 · 13

III · III

30 · 30

7

C

20

7

22

w

**Fig. 4**

# Fig. 3

# Fig. 5